Europäisches Patentamt

European Patent Office

Office européen des brevets

(11) Publication number: **0 255 232**
**A1**

## (12) EUROPEAN PATENT APPLICATION

(21) Application number: **87305699.8**

(22) Date of filing: **26.06.87**

(51) Int. Cl.⁴: **B05B 17/00 , F24F 6/10 , A01G 13/06 , B01F 3/02**

(30) Priority: **01.08.86 GB 8618878**

(43) Date of publication of application:
**03.02.88 Bulletin 88/05**

(84) Designated Contracting States:
**BE DE ES FR GB IT NL**

(71) Applicant: **Hammond, Colin**
**97 Lily Close**
**London, W14 4YB(GB)**

(72) Inventor: **Hammond, Colin**
**97 Lily Close**
**London, W14 4YB(GB)**

(74) Representative: **Read, Matthew Charles et al**
**Venner Shipley & Co. 368 City Road**
**London EC1V 2QA(GB)**

(54) Mist making machine.

(57) A mist making machine for use in theatres and discotheques comprises a helical stainless steel tube (11) bounding the interior periphery of a cylindrical metal casing (12) filled with cast aluminium (13). An electric rod heater (14) is received in an axial bore in the aluminium (13). In use, a polyglycol/water mixture is pumped by a pump (2) into inlet (11a) of the helical tube (11) and is vaporised so as to emit mist from outlet (11b). A thermostat (15) and an associated control system ensures that the pump (2) can only be actuated when the tube (11) is hot enough to produce mist to as to avoid the ejection of scalding lqiuid by the device.

FIG.1.

## MIST MAKING MACHINE

### FIELD OF THE INVENTION

This invention relates to a mist making machine for use in discotheques, theatres and like entertainment venues and also has application to machines for producing vapours of pesticides and for horticultral uses.

### BACKGROUND TO THE INVENTION

Mist making machines are well known and have been used to produce a mist or fog for theatrical affects. Traditionally, dry ice (frozen carbon dioxide) has been used to produce a mist or fog (referred to hereinafter jointly and severally as mist). However, more recently mist making machines have been used which heat liquid to eject mist, the liquid typically comprising a mixture of polyglycol and water.

A known mist making machine consists of a cylindrical chamber defined by a cylindrical outer member within which is received a solid cylindrical metal body containing an electric heater. The cylindrical metal body is specially machined to produce a cylindrical chamber with a radial dimension of typically 0.02 inch. The metal body thus has to be carefully machined and is expensive to produce. Also, the body has a large thermal capacity which introduces a significant thermal lag between the application of heat by the heater to the metal body and the application of heat from the body to liquid in the chamber. As a result, the liquid is not heated reliably and there is a risk that the machine will eject hot liquid rather than mist, which could scald dancers in a discotheque.

### OBJECTS AND SUMMARY OF THE INVENTION

An object of the present invention is to provide a mist making machine in which the heating chamber can be produced in a much less expensive manner, and in which risk of ejection of hot liquid rather than mist is materially reduced.

According to the present invention from a first aspect there is provided a mist making machine comprising a tube having cast around it a a body of thermally conductive material, electric heater means for heating said material, and means for feeding into the tube liquid to be heated and ejected as mist.

Thus, in accordance with the invention a heating chamber is provided by the tube, without the need for special machining operations.

Preferably, the tube is arranged in a helix which bounds the internal periphery of a cylindrical metal casing into which the thermally conductive material is cast. Conveniently, the cylindrical casing comprises a length of steel tube and the thermally conductive material comprises aluminium which is poured in a molten state into the casing so as to achieve intimate thermal contact with the helical tube.

Preferably the helical tube is made of stainless steel.

Conveniently, the heater means comprises a rod heater typically of the kind used in plastics injection moulding machines, which is fitted into a hole drilled in the cast material.

According to a second aspect of the invention, there is provided a mist making machine comprising a chamber to receive a liquid to be heated to form a mist, electrical heater means for heating the chamber, pumping means for pumping the liquid into the chamber, and means for enabling operation of the pumping means only when said chamber is at a temperature sufficient to produce said mist, whereby to inhibit ejection of hot liquid from the chamber.

Preferably, actuation of the pumping means is arranged automatically to cause energisation of the heater means, so as to mitigate cooling of the chamber by newly injected liquid.

Preferably, a thermostat is provided for controlling operation of the heater means so as to maintain the chamber at a temperature appropriate for producing said mist. Preferably also, thermostat means are provided for disabling operation of the machine in the event of thermal runaway.

### BRIEF DESCRIPTION OF THE DRAWINGS

In order that the invention may be more fully understood and readily carried into effect an embodiment thereof will be described by way of example with reference to the accompanying drawings, wherein:

Figure 1 is a vertical sectional view of a mist making machine according to the invention;

Figure 2 is a vertical section through the mist making chamber shown in Figure 1; and

Figure 3 is schematic block diagram of electrical control circuits for the machine.

## DESCRIPTION OF EMBODIMENT

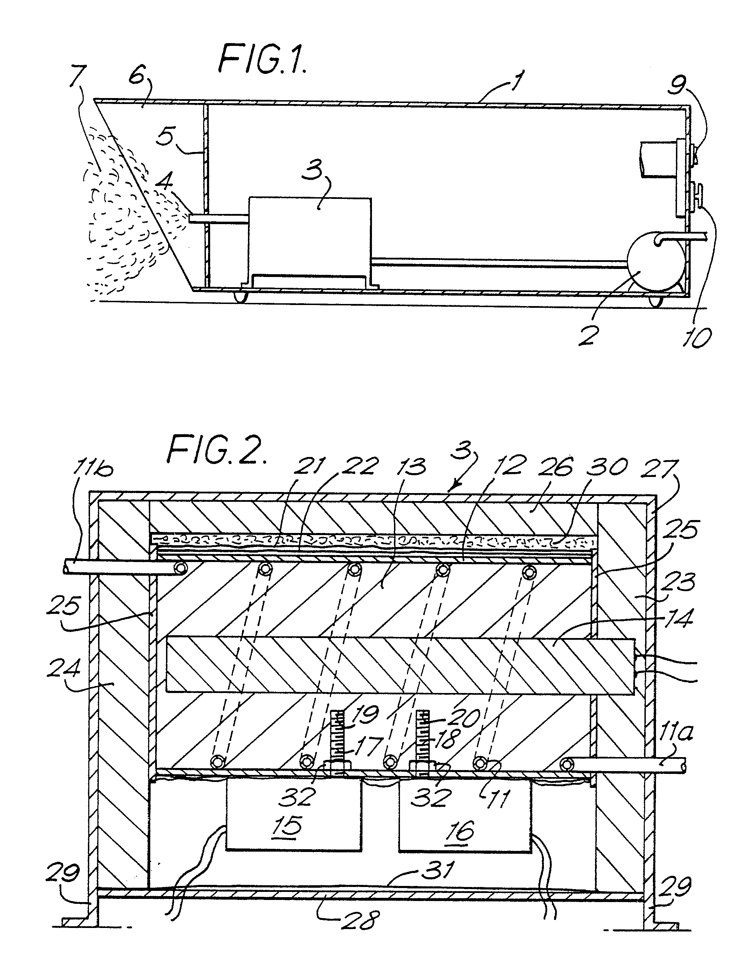

Referring to Figure 1, the machine comprises a metal housing 1 within which is received an electric pump 2 that feeds liquid to a mist making chamber 3. The chamber has an outlet tube 4 which extends through a bulkhead 5 in the housing 1 into a shroud 6 where mist 7 is formed.

An electrical control circuit 8 is mounted within the housing and is connected to an on/off switch 9 and a push switch 10 for operating the pump 2.

Figure 2 shows the mist making chamber 3 in more detail. The chamber 3 comprises a helical tube of aerospace grade stainless steel 11, which bounds the interior periphery of a cylindrical casing 12 formed from a length of steel tube e.g. water pipe of $2\frac{1}{2}$ inches (6 cm) diameter and length 5 inches (12 cm).

The casing 12 is filled with cast aluminium 13. An electric heater element 14 is received within an axial bore in the cast aluminium 13. The heater element 14 is conventiently of the type used in plastics injection moulding machines. Typically the heater has a rating of 500 or 1,000 W. First and second thermostats 15, 16 are mounted on the casing 12 and have sensor rods 17, 18 that are received in threaded bores 19, 20 formed through the casing 12 into the cast aluminium 13.

The casing 12 is wrapped with two layers of aluminium foil 21, 22 provided for heat insulation purposes. Preferably, the most reflective surface of the foil 21, 22 is directed inwards. Preferably, a heat insulating silica-based paper is included between the aluminium foil layers to improve insulation.

The helical tube 11 has an inlet end 11a and an outlet end 11b which each extend through holes in insulating blocks 23, 24. The blocks are conveniently made of expanded glass material and are rigid to provide support for the chamber. Preferably, aluminium plates 25 are provided between the ends of the casing 12 and the insulating blocks 23, 24 to prevent the blocks being chafed by the casing during transit. An insulating block 26 of the same material as blocks 23, 24 spans the upper part of the casing 12.

The casing 12 and blocks 23, 24, 26 are received in a metal box 27 closed on its underside by a lid 28 and which defines integral legs 29. The remaining space in the upper part of the box 27 is filled by a silica insulating wool material 30.

The space between the thermostats 15, 16 and the lid 28 is free of insulating material, so as not to inhibit their operation. A layer of insulating silica paper 31 is provided on the interior of the lid 28.

The chamber is manufactured by inserting the helical tube 11 into the casing 12, closing it at one end with a sheet of silica paper (of the type used in foundries) and then pouring molten aluminium into the casing 12. In order to form the threaded bores 19, 20 threaded brass bolts are first held in position by nuts 32 prior to the pouring of the molten aluminium. When the aluminium has set, the bolts form the sensor rods 17, 18. An axial bore is then drilled into the aluminium which receives the heater element 14. The bore is arranged not to extend completely through the entire length of the aluminium 13, since it has been found that this prevents localised overheating at the end of the heater 14. The resulting arrangement is then fitted with the insulating blocks 23, 24 and inserted into the box 27 from its underside, the remaining upper part of the box space being filled with the wool material 30.

In use, the pump 2 (Figure 1) pumps a mixture of polyglycol, e.g. polypropyleneglycol known by the trade name "Carbowax 200" and water into the inlet opening 11a of tube 11. The helical portion of the tube is heated by heater 14 to a temperature of approximately 260°C with the result that the liquid expands and evaporates so as to be ejected as a mist from the outlet 11b. This outlet is connected to the outlet 4 shown in Figure 1 such that mist 7 is ejected under the shroud 6.

The cast aluminium provides good thermal conductivity between the heater 14 and the tube 11 but does not have to be machined accurately to define the chamber in which the mist is produced as in the prior art. Also, the volume of aluminium needed is relatively small compared to the prior art device mentioned hereinbefore and consequently the thermal lag between operation of the heater and heating of the liquid is substantially reduced.

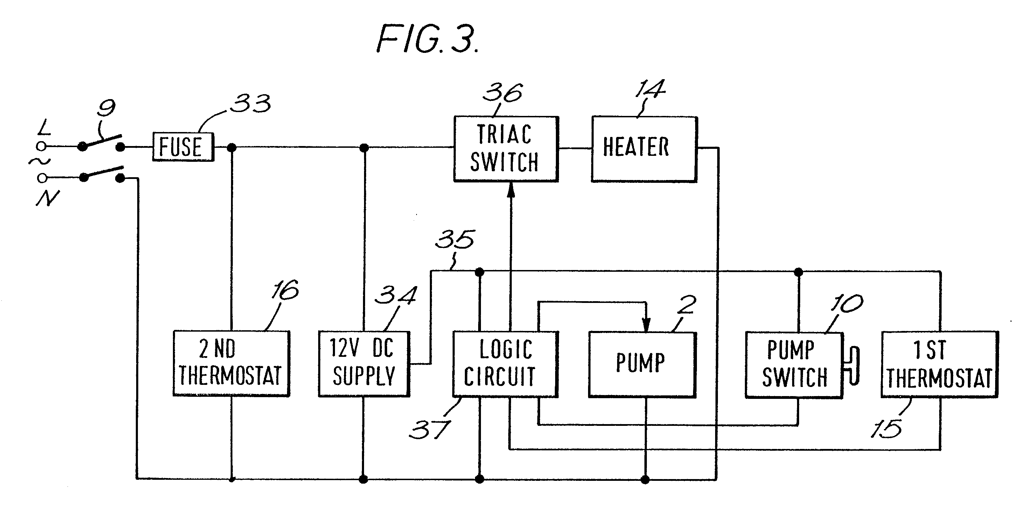

The control circuit for the machine will now be described with reference to Figure 3. Live and neutral leads of a domestic ac supply are connected through the double pole switch 9 and a fuse 33 to a dc power supply circuit 34 that produces a nominally 12-volt dc supply on rail 35. The live lead of the ac supply is fed under the control of a triac switch 36 to the heater element 14. A logic circuit 37 is provided to control operation of the triac switch 36 for the heater 14 and also the pump 2. The logic circuit 37 receives inputs from the pump switch 10 and also the first thermostat 15. When the circuit is switched on initially, the logic circuit disables operation of the pump 2 until the first thermostat 15 indicates that the chamber 3 has reached its operating temperature. The logic circuit 37 then controls operation of the triac switch 36 in response to the first thermostat 15 in order to ensure that the heater 14 maintains the temperature of the chamber 3 in an operating range of 260 to 280°C. This initial disablement of the pump is designed to prevent the chamber emitting hot liquid rather than mist.

When the machine has reached its normal operating temperature range and the pump switch 10 is actuated, the pump 2 is enabled so as to inject liquid into the chamber 3 to produce mist. Simultaneously the logic circuit 37 switches on the triac switch 36 to energise the heater 14 and hence prevent the newly injected liquid from cooling the chamber 3.

The second thermostat 16 provides an automatic cut-out device in the event of thermal runaway. Should the control circuit fail and the heater 14 become permanently switched on, the second thermostat which has a trigger temperature higher than that of the first thermostat, then is triggered. This causes the live lead to be shorted to the neutral lead and causes the fuse 33 to blow, consequently disabling the machine completely.

Whilst the mist making machine described herein with reference to the drawings is intended primarily for use in discotheques, it can also be used for producing a mist of pesticides, for example for killing insects such as mosquitoes. It can also be used for producing sprays for use in horticultral applications.

Claims

1. A mist making machine comprising a tube, a body of thermally conductive material cast around the tube, electric heater means for heating said body of material, and means for feeding into the tube liquid to be heated and ejected as mist.

2. A mist making machine according to claim 1 wherein said tube is formed as a helix.

3. A mist making machine according to claim 1 or 2 including a cylindrical metal casing, said helical tube bounding the interior periphery of the casing, said body of thermally conductive material being cast in the casing.

4. A mist making machine acccording to any preceding claim wherein said cast material comprises aluminium and the tube is made of stainless steel.

5. A mist making machine according to claim 3 wherein said body of cast material includes a central bore, and said electric heater means comprises a rod heater received in said bore.

6. A mist making machine according to claim 5 wherein said bore extends only partially along the length of the body of cast material from one end.

7. A mist making machine according to any preceding claim including a box in which said casing is mounted, and thermally insulating material in the box around the casing.

8. A mist making machine according to claim 7 including a housing within which said box is mounted, said box door including a supply duct for the liquid, and said liquid feeding means.

9. A mist making machine according to claim 8 wherein said liquid feeding means comprises an electric pump.

10. A mist making machine according to any preceding claim including a supply of said liquid comprising a mixture of polyglycol and water.

11. A mist making machine according to any preceding claim including means for enabling operation of said liquid feeding means only when the tube is at a temperature sufficient to produce mist, whereby to inhibit ejection of hot liquid from the chamber.

12. A mist making machine according to any preceding claim including circuit means operative to cause energisation of the heater means in response to actuation of the heater means, so as to mitigate cooling of the tube by newly fed liquid.

13. A mist making machine according to any preceding claim including a thermostat for controlling operation of the heater means so as to maintain the tube at a temperature appropriate for producing said mist.

14. A mist making machine according to any preceding claim including a thermostat for disabling operation of the machine in the event of thermal runaway.

15. A mist making machine comprising a chamber to receive a liquid to be heated to form a mist, electrical heater means for heating the chamber, and means for enabling operation of the pumping means only when said chamber is at a temperature sufficient to produce said mist, whereby to inhibit ejection of hot liquid from the chamber.

# FIG.1.

# FIG.2.

FIG.3.

0 255 232

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US - A - 2 615 215 (STAGNER)<br><br>* Column 4, lines 23-56; column 6, lines 28-52 *<br><br>-- | 1,4,7, 13 | B 05 B 17/00<br>F 24 F  6/10<br>A 01 G 13/06<br>B 01 F  3/02 |
| A | AT - B - 201 921 (ROTH)<br>* Totality *<br><br>-- | 1,2,3, 5 | |
| A | AU - B - 69 156/81 (KOOR METALS LTD)<br><br>* Fig. 2; page 11, line 6 - page 13, line 8 *<br><br>-- | 1,2,3, 4 | |
| A | GB - A - 2 029 717 DRÄGERWERK AG)<br>* Claims; fig. *<br><br>-- | 1 | |
| A | GB - A - 1 230 322 (SHOWA DENKO KK)<br><br>* Claims; fig. 1-3 *<br><br>--- | 1 | |

**TECHNICAL FIELDS SEARCHED (Int. Cl.4)**

B 05 B
F 24 F
A 01 G
B 01 F

The present search report has been drawn up for all claims

| Place of search | Date of completion of the search | Examiner |
|---|---|---|
| VIENNA | 27-10-1987 | SCHÜTZ |